(19)

**Europäisches Patentamt**

**European Patent Office**

**Office européen des brevets**

(11) **EP 0 661 872 B1**

(12) **EUROPEAN PATENT SPECIFICATION**

(45) Date of publication and mention of the grant of the patent: **09.02.2000 Bulletin 2000/06**

(51) Int. Cl.$^{7}$: **H04N 5/44**, H04N 3/227

(21) Application number: **94119814.5**

(22) Date of filing: **15.12.1994**

(54) **Independent horizontal panning for side-by-side pictures**

Unabhängige horizontale Panoramierung für Seite-an-Seite Bilder

Panoramique horizontal indépendant pour images côte à côte

(84) Designated Contracting States: **DE GB**

(30) Priority: **21.12.1993 US 171141**

(43) Date of publication of application: **05.07.1995 Bulletin 1995/27**

(73) Proprietor:
**THOMSON CONSUMER ELECTRONICS, INC.**
**Indianapolis, IN 46206 (US)**

(72) Inventors:
- **Saeger, Timothy William**
  **Indianapolis IN 46260 (US)**
- **Willis, Donald Henry**
  **Indianapolis IN 46250 (US)**
- **Ersoz, Nathaniel Haluk**
  **Brownsburg IN 46112 (US)**

(74) Representative:
**Hartnack, Wolfgang, Dipl.-Ing.**
**Deutsche Thomson-Brandt GmbH**
**European Patent Operations**
**Karl-Wiechert-Allee 74**
**30625 Hannover (DE)**

(56) References cited:
**WO-A-91/19397**
**US-A- 4 266 242**
**US-A- 5 287 188**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 661 872 B1

## Description

The invention relates to the field of televisions capable of displaying side-by-side pictures of substantially equal size from different sources, and in particular, to such televisions having a wide display format ratio screen. Most televisions today have a format display ratio, horizontal width to vertical height, of 4:3. A wide format display ratio corresponds more closely to the display format ratio of movies, for example 16:9. The invention is applicable to both direct view televisions and projection televisions.

Televisions with a wide display format ratio are suited to a wide variety of displays for both conventional and wide display format signals, as well as combinations thereof in multiple picture displays. However, the use of a wide display ratio screen entails numerous problems. Changing the display format ratios of multiple signal sources, developing consistent timing signals from asynchronous but simultaneously displayed sources, switching between multiple sources to generate multiple picture displays, and providing high resolution pictures from compressed data signals are general categories of such problems. A wide screen television capable of providing high resolution, single and multiple picture displays, from single and multiple sources having similar or different format ratios, and with selectable display format ratios is disclosed, for example, in each of: WO 91/19397, published December 12, 1991 and corresponding to PCT/US91/03746; and, WO 91/19395, published December 12, 1991 and corresponding to PCT/US91/03742.

Such television apparatus as disclosed in WO 91/19397 and WO 91/19395 can display multiple pictures simultaneously, for example from two video sources. The video sources may be multiple tuners in the television, a tuner in a video cassette recorder, a video camera, and others. A display mode particularly suited for a wide screen television is side-by-side pictures of substantially the same size, from different video sources, for example two different channels. In a wide screen television having a display format ratio (width to height) of 16:9, each of two side-by-side pictures of comparable size in a full screen display would have a format display ratio of 8:9. In order to fit a 4:3 picture into an 8:9 space, the 4:3 picture must be horizontally cropped or horizontally compressed, or some combination of both.

The center of each side-by-side picture may be chosen for display as a default display mode for this feature. However, the relatively large amount of picture cropping may be responsible for cutting off an important part of either or both of the side-by-side pictures. This will depend upon the specific subject matter and content of each picture and will likely change over the course of the picture. In the event that either of the pictures is a sports event, for example, a viewer might find that only the center of a playing field or court is displayed and that all goals are cropped.

Panning of a main picture in a wide screen television is known from US-A-5 287 188 published on 15.02.94. Panning of a picture-in-picture (PIP) insert in a wide screen television is known from DE-A-43 00 043. When panning a PIP, the auxiliary video which is displayed remains constant, but the location where the video is displayed is varied. The horizontal position of the PIP on the display is a function of the delay period between the start of a horizontal line being displayed and the start of reading from a first-in first-out line memory (FIFO) in the auxiliary signal path. In order to manipulate the horizontal position of the PIP, the delay between the start of each line (SOL) and the start of reading the auxiliary FIFO is varied, for example by means of a microprocessor. In the side-by-side mode, by way of contrast, the location of the auxiliary video must remain unchanged but the portion of the video signal which is displayed in that location must be varied.

Since the location on the display allocated for the auxiliary video does not change in the side-by-side mode, the delay between the start of line and the start of reading the auxiliary FIFO must remain constant. In order to change the portion of the auxiliary video which is displayed, the delay between the start of line and the start of writing into the auxiliary FIFO is varied to change the portion of the auxiliary video which is stored in the auxiliary FIFO.

In accordance with the invention, there is provided a video display system in accordance with claim 1.

A video display system which provides independent horizontal panning of side-by-side pictures, comprises a video display means, for example a wide screen television apparatus; first signal processing means for cropping a first video signal representative of a first picture; second signal processing means for cropping a second video signal representative of a second picture; means coupled to the first and second signal processing means for generating a side-by-side display of respective uncropped portions of the first and second pictures on the video display means; and, panning control means, responsive to panning command signals, for independently controlling the first and second signal processing means to select which portions of the first and second pictures form the side-by-side display. The panning command signals may be initiated, for example, by activation of buttons on a remote control unit.

A first memory in the first signal processing path has write and read ports and is responsive to the panning control means. The first video signal is written into the first memory in accordance with a first variable panning delay from onset of each horizontal line period of the first video signal, and read from the first memory with a first fixed delay from the onset of each horizontal line period of the first video signal. The first fixed delay locates the first picture on a first lateral side of the side-by-side display independently of the first variable panning delay.

A second memory in the second signal processing path has write and read ports and is responsive to the panning control means. The second video signal is written into the second memory in accordance with a second variable panning delay from onset of each horizontal line period of the second video signal, independently of the first variable panning delay, and read from the second memory with a second fixed delay from the onset of each horizontal line period of the first video signal, different from the first fixed delay. The second fixed delay locates the second picture on a second side of the side-by-display independently of the second variable panning delay.

The memories may be first-in-first-out (FIFO) line memories having asynchronous write and read ports. Means for generating the panning command signals responsive to user input may comprise a remote control unit.

FIGURE 1 is a block diagram of a wide screen television adapted for operation at $2f_H$ horizontal scanning.

FIGURE 2 is a block diagram of the gate array of FIGURE 1, illustrating the main, auxiliary and output signal paths.

FIGURE 3 is a block diagram showing portions of FIGURE 2 in greater detail.

FIGURE 4 is a diagram of a side-by-side display on a wide screen television.

FIGURES 5(a) - 5(b), 6(a) - 6(b) and 7(a) - 7(c) are timing diagrams useful for explaining the generation of the display format shown in FIGURE 4, using fully cropped signals.

FIGURES 8(a) - 8(b), 9(a) - 9(b) and 10(a) - 10(b) are timing diagrams useful for explaining independent horizontal panning with respect to the timing diagrams of FIGURES 5(a) - 5(b), 6(a) - 6(b) and 7(a) - 7(c).

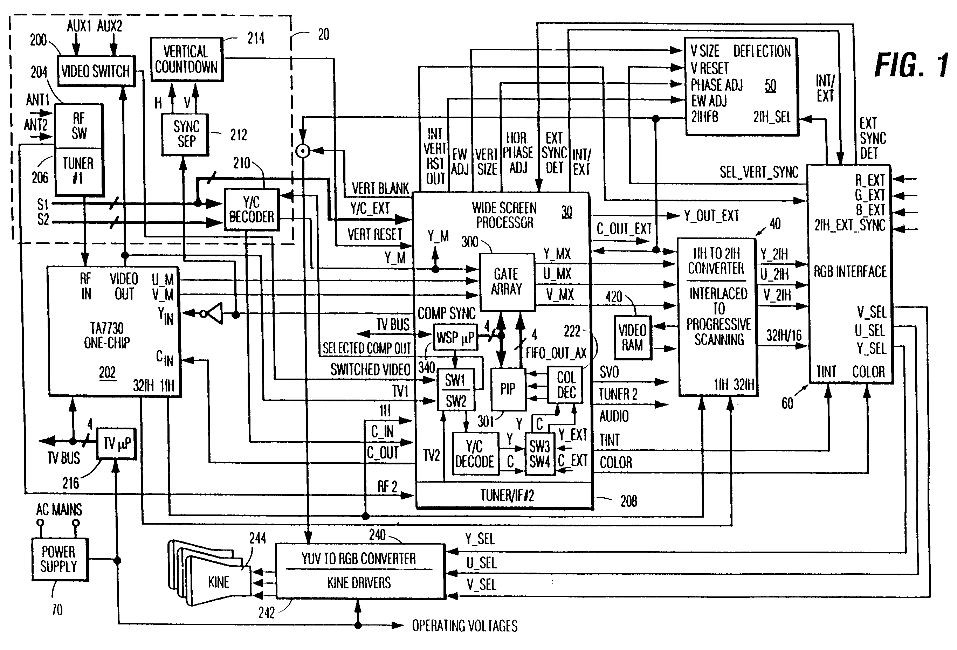

An overall block diagram for a wide screen television apparatus in accordance with WO 91/19397 and WO 91/19395, and adapted to operate with $2f_H$ horizontal scanning, is shown in FIGURE 1 and generally designated 10. The television 10 generally comprises a video signals input section 20, a chassis or TV microprocessor (TV μP) 216, a wide screen processor 30, a $1f_H$ to $2f_H$ converter 40, a deflection circuit 50, an RGB interface 60, a YUV to RGB converter 240, kine drivers 242, direct view or projection tubes 244 and a power supply 70. The YUV to RGB converter 240 may be an industry type TA7777. The grouping of various circuits into different functional blocks is made for purposes of convenience in description, and is not intended as limiting the physical position of such circuits relative to one another.

The video signals input section 20 is adapted for receiving a plurality of composite video signals from different video sources. The video signals may be selectively switched for display as main and auxiliary video signals. An RF switch 204 has two antenna inputs ANT1 and ANT 2. These represent inputs for both off-air antenna reception and cable reception. The RF switch 204 controls which antenna input is supplied to a first tuner 206 and to a second tuner 208. The output of first tuner 206 is an input to a one-chip 202, which performs a number of functions related to tuning, horizontal and vertical deflection and video controls. The particular one-chip shown is industry designated type TA7777. The baseband video signal VIDEO OUT developed in the one-chip and resulting from the signal from first tuner 206 is an input to both video switch 200 and the TV1 input of wide screen processor 30. Other baseband video inputs to video switch 200 are designated AUX1 and AUX 2. These might be used for video cameras, laser disc players, video tape players, video games and the like. The output of the video switch 200, which is controlled by the chassis or TV microprocessor 216 is designated SWITCHED VIDEO. The SWITCHED VIDEO is another input to wide screen processor 30.

A switch SW1 wide screen processor selects between the TV1 and SWITCHED VIDEO signals as a SEL COMP OUT video signal which is an input to a Y/C decoder 210. The Y/C decoder 210 may be implemented as an adaptive line comb filter. Two further video sources S1 and S2 are also inputs to the Y/C decoder 210. Each of S1 and S2 represent different S-VHS sources, and each consists of separate luminance and chrominance signals. A switch, which may be incorporated as part of the Y/C decoder, as in some adaptive line comb filters, or which may be implemented as a separate switch, is responsive to the TV microprocessor 216 for selecting one pair of luminance and chrominance signals as outputs designated Y_M and C_IN respectively. The selected pair of luminance and chrominance signals is thereafter considered the main signal and is processed along a main signal path. Signal designations including _M or _MN refer to the main signal path. The chrominance signal C_IN is redirected by the wide screen processor back to the one-chip, for developing color difference signals U_M and V_M. In this regard, U is an equivalent designation for (R-Y) and V is an equivalent designation for (B-Y). The Y_M U_M and V_M signals are converted to digital form in the wide screen processor for further signal processing.

A second tuner 208, functionally defined as part of the wide screen processor 30, develops a baseband video signal TV2. A switch SW2 selects between the TV2 and SWITCHED VIDEO signals as an input to a Y/C decoder 210. The Y/C decoder 210 may be implemented as an adaptive line comb filter. Switches SW3 and SW4 select between the luminance and chrominance outputs of Y/C decoder 210 and the luminance and chrominance signals of an external video source, designated Y_EXT and C_EXT respectively. The Y_EXT and C_EXT signals correspond to the S-VHS input S1. The Y/C decoder 210 and switches SW3 and SW4 may be combined, as in some adaptive line comb filters. The output of switches SW3 and SW4 is thereafter considered the auxiliary signal and is processed along an auxiliary signal path. The selected luminance output is designated Y_A. Signal designations including _A, _AX and _AUX refer to the auxiliary signal path. The selected chrominance is converted to color difference signals U_A and V_A. The Y_A U_A and V_A signals are converted to digital form for further signal processing. The arrangement of video signal source switching in the main and auxiliary signal paths maximizes flexibility in managing the source selection for the different parts of the different picture display formats.

A composite synchronizing signal COMP SYNC, corresponding to Y_M is provided by the wide screen processor to a sync separator 212. The horizontal and vertical synchronizing components H and V respectively are inputs to a vertical countdown circuit 214. The vertical countdown circuit develops a VERTICAL RESET signal which is directed into the wide screen processor 30. The wide screen processor generates an internal vertical reset output signal INT VERT RST OUT directed to the RGB interface 60. A switch in the RGB interface 60 selects between the internal vertical reset output signal and the vertical synchronizing component of the external RGB source. The output of this switch is a selected vertical synchronizing component SEL_VERT_SYNC directed to the deflection circuit 50. Horizontal and vertical synchronizing signals of the auxiliary video signal are developed by sync separator 212 in the wide screen processor.

The $1f_H$ to $2f_H$ converter 40 is responsible for converting interlaced video signals to progressively scanned noninterlaced signals, for example one wherein each horizontal line is displayed twice, or an additional set of horizontal lines is generated by interpolating adjacent horizontal lines of the same field. In some instances, the use of a previous line or the use of an interpolated line will depend upon the level of movement which is detected between adjacent fields or frames. The converter circuit 40 operates in conjunction with a video RAM 420. The video RAM 420 may be used to store one or more fields of a frame, to enable the progressive display. The converted video data as $Y_2f_H$, $U_2f_H$ and $V_2f_H$ signals is supplied to the RGB interface 60.

The RGB interface 60 enables selection of the converted video data or external RGB video data for display by the video signals input section. The external RGB signal is deemed to be a wide format display ratio signal adapted for $2f_H$ scanning. The vertical synchronizing component of the main signal is supplied to the RGB interface by the wide screen processor as INT VERT RST OUT, enabling a selected vertical sync ($f_{Vm}$ or $f_{Vext}$) to be available to the deflection circuit 50. Operation of the wide screen television enables user selection of an external RGB signal, by generating an internal/external control signal INT/EXT. However, the selection of an external RGB signal input, in the absence of such a signal, can result in vertical collapse of the raster, and damage to the cathode ray tube or projection tubes. Accordingly, the RGB interface circuit detects an external synchronizing signal, in order to override the selection of a non-existent external RGB input. The WSP microprocessor 340 also supplies color and tint controls for the external RGB signal.

The wide screen processor 30 comprises a picture in picture processor 301 for special signal processing of the auxiliary video signal. A gate array 300 combines the main and auxiliary video signal data in a wide variety of display formats. The picture-in-picture processor (PIP) 301 and gate array 300 are under the control of a wide screen microprocessor (WSP μP) 340. Microprocessor 340 is responsive to the TV microprocessor 216 over a serial bus. The serial bus includes four signal lines, for data, clock signals, enable signals and reset signals. The wide screen processor 30 also generates a composite vertical blanking/reset signal, as a three level sand castle signal. Alternatively, the vertical blanking and reset signals can be generated as separate signals. A composite blanking signal, not shown, can be supplied by the video signal input section to the RGB interface.

The deflection circuit 50 receives a vertical reset signal from the wide screen processor, a selected $2f_H$ horizontal synchronizing signal from the RGB interface 60 and additional control signals from the wide screen processor. These additional control signals relate to horizontal phasing, vertical size adjustment and east-west pin adjustment. The deflection circuit 50 supplies $2f_H$ flyback pulses to the wide screen processor 30, the $1f_H$ to $2f_H$ converter 40 and the YUV to RGB converter 240.

Operating voltages for the entire wide screen television are generated by a power supply 70 which can be energized by an AC mains supply.

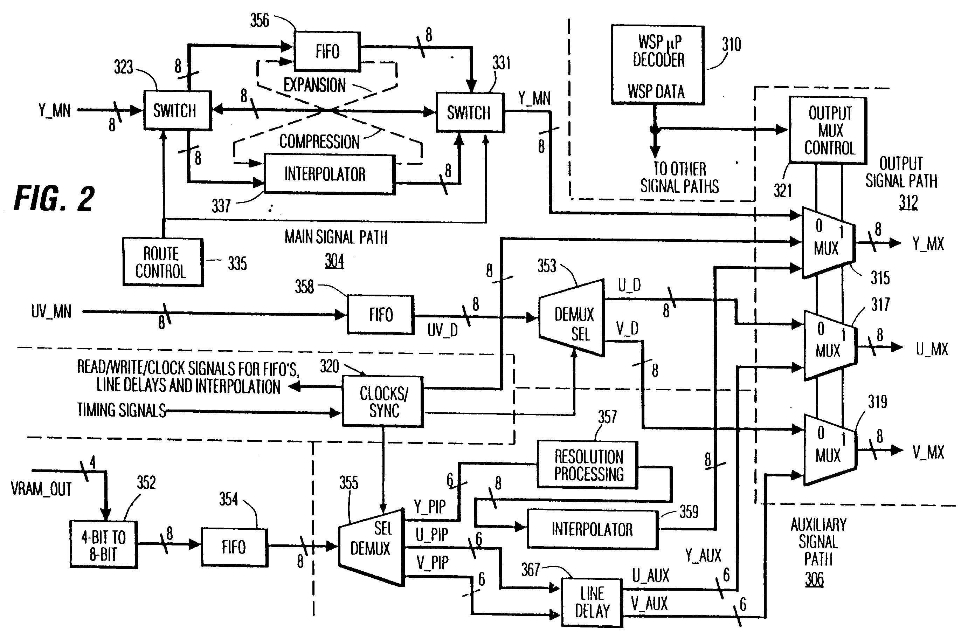

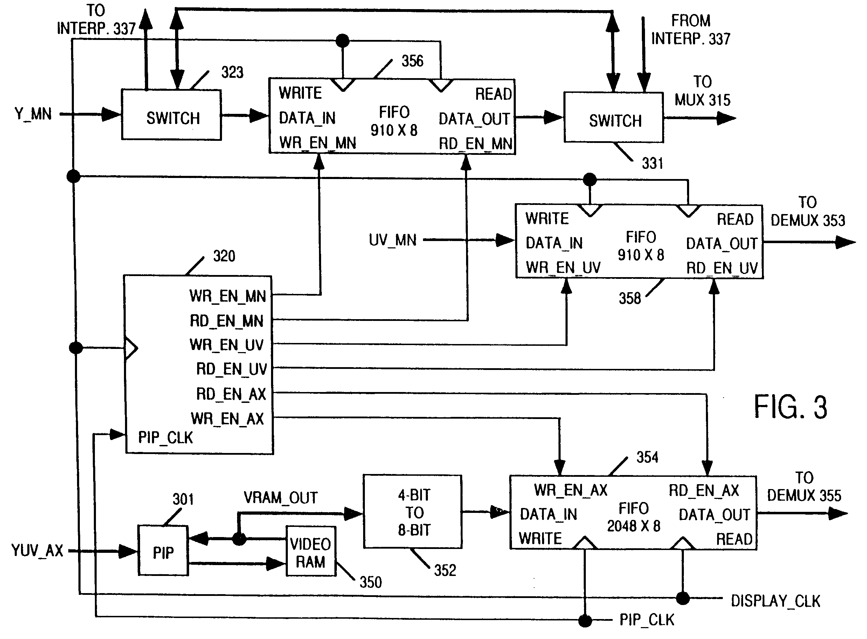

The gate array is shown in FIGURE 2. Gate array 300 is responsible for combining video information from the main and auxiliary signal paths to implement a composite wide screen display. The main video signal is supplied to the wide screen processor in analog form, and Y U V format, as signals designated Y_M U_M and V_M. These main signals are converted from analog to digital form by analog to digital converters. The main signal path 304, auxiliary signal path 306 and output signal path 312 of the gate array 300 are shown in block diagram form. The gate array also comprises a clocks/sync circuit 320 and a WSP μP decoder 310. Data and address output lines of the WSP μP decoder 310, identified as WSP DATA, are supplied to each of the main circuits and paths identified above, as well as to the picture-in-picture processor (PIP) 301 and resolution processing circuit 357. The PIP processor 301 operates in conjunction with another video RAM 350, as shown in FIGURE 3.

With further reference to FIGURE 3, the gate array is responsible for expanding, compressing and cropping video data of the main video channel, as and if necessary, to implement different picture display formats. The luminance component Y_MN is stored in a first in first out (FIFO) line memory 356 for a length of time depending on the nature of the interpolation of the luminance component. The combined chrominance components U/V_MN are stored in FIFO 358.

For purposes of clarity, the PIP processor 301 is shown in FIGURE 3 as simply having an auxiliary video data signal YUV_AX as an input. Auxiliary signal luminance and chrominance components Y_PIP U_PIP and V_PIP are developed by demultiplexer 355. The luminance component undergoes resolution processing, as desired, in circuit 357, and is expanded as necessary by interpolator 359, generating signal Y_AUX as an output.

In some instances, the auxiliary display will be as large as the main signal display. Due to memory limitations associated with the picture-in-picture processor 301 and video RAM 350, a resolution processing circuit 357 can be used to restore apparent resolution to the auxiliary video signal which was lost during data compression, or reduction. As an example, circuit 357 may be a dedithering circuit if the video signal has previously been dithered.

The auxiliary video input data is sampled at a $640f_H$ rate and stored in video RAM 350. The auxiliary data is read out of video RAM 350 is designated VRAM_OUT. The PIP circuit 301 also has the capability of reducing the auxiliary picture by equal integer factors horizontally and vertically, as well as asymmetrically. The auxiliary channel data is buffered and synchronized to the main channel digital video by the 4-bit latches 352, the auxiliary FIFO 354 and clocks/sync circuit 320. The VRAM_OUT data is sorted into Y (luminance), U, V (color components), and fast switch data, not shown, by demultiplexer 355. The fast switch data indicates which field type, even or odd, was written into the video RAM 350. A PIP fast switch signal is received directly from the PIP circuit and applied to the output MUX control circuit 321 to determine which field read out of video RAM 350 is to be displayed during the small picture modes.

The auxiliary channel is sampled at $640f_H$ rate while the main channel is sampled at a $1024f_H$ rate. The auxiliary channel FIFO 354 converts the data from the auxiliary channel sample rate to the main channel clock rate. In this process, the video signal undergoes an $^{8}/_{5}$ ($^{1024}/_{640}$) compression. This is more than the $^{4}/_{3}$ compression necessary to correctly display the auxiliary channel signal. Therefore, the auxiliary channel must be expanded by the interpolator 359 to correctly display a 4 X 3 small picture. The interpolator 359 is controlled indirectly by the WSP μP 340, through an interpolator control circuit, not shown. The amount of interpolator expansion required is $^{5}/_{6}$. The expansion factor X is determined as follows:

$$X = (^{640}/_{1024}) * (^{4}/_{3}) = {}^{5}/_{6}$$

The chrominance components U_PIP and V_PIP are delayed by circuit 367 for a length of time depending on the nature of the interpolation of the luminance component, generating signals U_AUX and V_AUX as outputs. The respective Y, U and V components of the main and auxiliary signals are combined in respective multiplexers 315, 317 and 319 in the output signal path 312, by controlling the read enable signals of the FIFO's 354, 356 and 358. The multiplexers 315, 317 and 319 are responsive to output multiplexer control circuit 321. Output multiplexer control circuit 321 is responsive to a clock signal, a start of line signal, a horizontal line count signal, a vertical blanking reset signal and the fast switch data signal. The multiplexed luminance and chrominance components Y_MX U_MX and V_MX are supplied to respective digital/analog converters. The digital to analog converters are followed by low pass filters. The various functions of the picture-in-picture processor, the gate array and the data reduction circuit are controlled by WSP μP 340. The WSP μP 340 is responsive to the TV μP 216, being connected thereto by a serial bus. The serial bus may be a four wire bus as shown, having lines for data, clock signals, enable signals and reset signals. The WSP μP 340 communicates with the different circuits of the gate array through a WSP μP decoder 310.

In one case, it is necessary to compress the 4 X 3 NTSC video by a factor of 4/3 to avoid aspect ratio distortion of the displayed picture. In the other case, the video can be expanded to perform horizontal zooming operations usually accompanied by vertical zooming. Horizontal zoom operations up to 33% can be accomplished by reducing compressions to less than 4/3. A sample interpolator is used to recalculate the incoming video to a new pixel positions because the luminance video bandwidth, up to 5.5 MHz for S-VHS format, occupies a large percentage of the Nyquist fold over frequency, which is 8 MHz for a $1024f_H$ clock.

The luminance data Y_MN is routed through an interpolator 337 in the main signal path 304 which recalculates sample values based on the compression or the expansion of the video. The function of the switches or route selectors 323 and 331 is to reverse the topology of the main signal path 304 with respect to the relative positions of the FIFO 356 and the interpolator 337. In particular, these switches select whether the interpolator 337 precedes the FIFO 356, as required for compression, or whether the FIFO 356 precedes the interpolator 337, as required for expansion. The switches 323 and 331 are responsive to a route control circuit 335, which is itself responsive to the WSP μP 340. During small picture modes the auxiliary video signal is compressed for storage in the video RAM 350, and only expansion is necessary for practical purposes. Accordingly, no comparable switching is required in the auxiliary signal path.

The clocks/sync circuit 320 generates read, write and enable signals needed for operating FIFOs 354, 356 and 358. The FIFOs for the main and auxiliary channels are enabled for writing data into storage for those portions of each video line which is required for subsequent display. Data is read from one of the main or auxiliary channels as necessary to combine data from each source on the same video line or lines of the display. The FIFO 354 of the auxiliary channel is written synchronously with the auxiliary video signal, but is read out of memory synchronously with the main video signal. The main video signal components are written into the FIFOs 356 and 358 synchronously with the main video signal, and are read out of memory synchronously with the main video. Switching the read function back and forth between the main and auxiliary channels is a function of the particular special effect chosen.

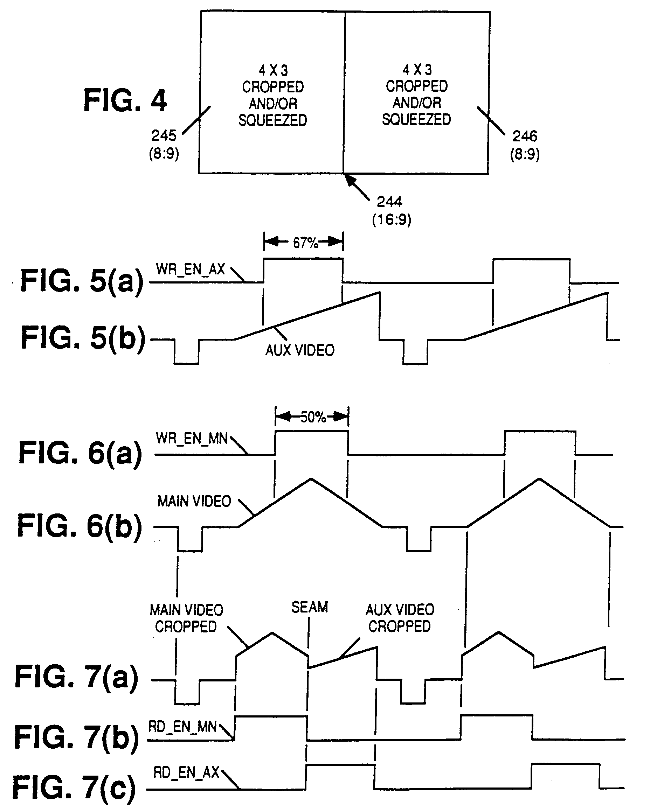

Generation of different special effects such as cropped side-by-side pictures as shown in FIGURE 4 are accomplished through manipulating the read and write enable control signals for the line memory FIFOs. The process for this display format is illustrated in FIGURES 5(a) - 5(b), 6(a) - 6(b) and 7(a) - 7(c). The auxiliary video signal is shown in FIGURE 5(b). The active video of the auxiliary video signal is illustrated as a simple ramp. In the case of cropped side-by-side displayed pictures, the write enable control signal (WR_EN_AX) for 2048 X 8 FIFO 354 of the auxiliary channel is active for $(1/_2)*(4/_3)$ = .67, approximately 67% of the auxiliary channel active line period (pre speed up), as shown in FIGURE 5(a). This corresponds to approximately 33% cropping (approximately 67% active picture) a compression ratio of 4/3 being performed on the auxiliary channel video. In the main video channel, shown in FIGURE 6(b), the main video signal is illustrated as a simple triangle. The write enable control signal (WR_EN_MN_Y) for the 910 X 8 FIFOs 356 and 358 is active for $(1/_2)*(4/_3)$ = 0.67 or 67% of the main channel active line period, as shown in FIGURE 6(a). This corresponds to approximately 33% cropping and a compression ratio of $4/_3$ being performed on the main channel video by the 910 x 8 FIFOs.

In each of the FIFOs, the video data is buffered to be read out at a particular point in time. The active region of time where the data may be read out from each FIFO is determined by the display format chosen. In the example of the side-by-side cropped mode shown, the main channel video is being displayed on the left hand half of the display and the auxiliary channel video is displayed on the right hand half of the display. The arbitrary video portions of the waveforms are different for the main and auxiliary channels as illustrated. The read enable control signal (RD_EN_MN) of the main channel 910 x 8 FIFOs is active for 50% of the display active line period of the display beginning with the start of active video, immediately following the video back porch, as shown in FIGURE 7b. The auxiliary channel read enable control signal (RD_EN_AX) is active for the other 50% of the display active line period beginning with the falling edge of the RD_EN_MN signal and ending with the beginning of the main channel video front porch, as shown in FIGURE 7c. The resulting side-by-side picture in shown in FIGURE 7a. The left half of the side-by-side picture is the center portion of the main picture. The right half of the side-by-side picture is the center portion of the auxiliary picture. The border between the left and right halves is denoted by a seam. It may be noted that write enable control signals are synchronous with their respective FIFO input data (main or auxiliary) while the read enable control signals are synchronous with the main channel video.

A side-by-side display is particularly effective and appropriate for a wide format display ratio display, for example 16 X 9. Most NTSC signals are represented in a 4 X 3 format, which of course corresponds to 12 x 9. Two 4 X 3 format display ratio NTSC pictures may be presented on the same 16 X 9 format display ratio display, either by cropping the pictures by 33% or squeezing the pictures by 33%, and introducing aspect ratio distortion. Depending on user preference, the ratio of picture cropping to aspect ratio distortion may be set anywhere in between the limits of 0% and 33%. As an example, two side-by-side pictures may be presented as 16.7% squeezed and 16.7% cropped.

It is also possible to generate an adjacent display of respective uncropped portions of cropped first and second pictures from a first and a second video signal on the video display, wherein the displayed uncropped portions are substantially comparable in size and shape. Panning control means select which portions of said first and second pictures form the adjacent display.

Portions of FIGURE 2 are shown in greater detail in FIGURE 3. The clocks/sync circuit 320 generates the write and read enable signals for the main luminance (Y_MN) FIFO 356, the main chrominance UV_MN) FIFO 358 and the auxiliary luminance and chrominance (VRAM_OUT) FIFO 354. The write and read functions of the main signal path FIFO's 356 and 358 are synchronous with the display, which is synchronized with the main video signal. This signal is denoted in FIGURE 3 as DISPLAY_CLK. The auxiliary video signal is most likely asynchronous with the main video signal. Accordingly, the write and read functions of the auxiliary signal path FIFO 354 are asynchronous with one another. The write function is synchronous with the clock signal of the picture-in-picture (PIP) processor 301, denoted as PIP_CLK. This is the same clock signal which read data from a video RAM associated with the PIP processor as VRAM_OUT. The read function is synchronous with the display, as shown. Some FIFO's are not provided with separate clock inputs, as are those shown in FIGURE 3. The use of such other kind of FIFO, for example as the auxiliary signal path FIFO 354, might result in the need for the read function to have a different frequency than the DISPLAY_CLK signal, as well as different from the PIP_CLK signal. Even so, one of the requirements of the auxiliary signal path processing circuitry in general is to synchronize the auxiliary video data with the video display. The interpolator 359 and line delay 367 can be utilized for this purpose.

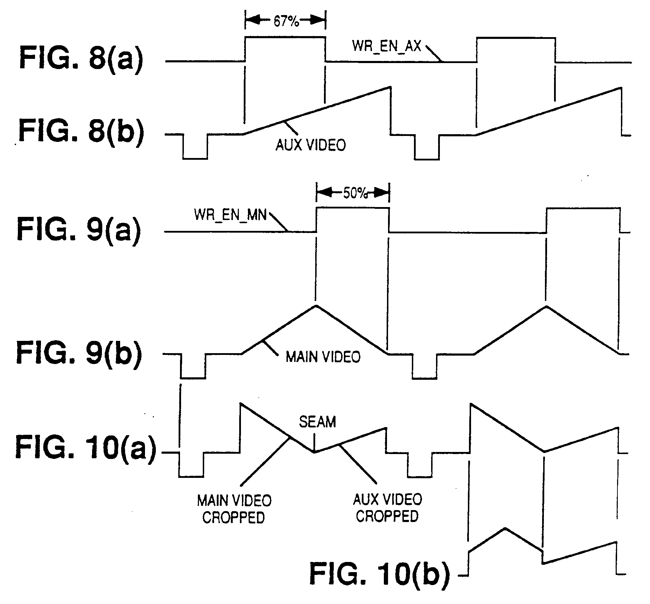

In order to avoid image aspect ratio distortion caused by squeezing the pictures, another method must be available to show cropped portions of the picture if deemed desirable by a viewer. In accordance with inventive arrangements, each of the side-by-side pictures can be horizontally panned, to the left and to the right, independently of one another. Independent panning is possible because each of the main and auxiliary video channels includes a FIFO (main channel, 356; auxiliary channel, 354) with independent write and read pointers. Horizontal panning can be accomplished by advancing or delaying the write enable windows (WR_EN_MN, WR_EN_AX). Such manipulation of the write enable windows is illustrated in FIGURES 8(a) - 8(b) and 9(a) and 9(b). The auxiliary video signal shown in FIGURE 8(b) is the same as the auxiliary video signal shown in FIGURE 5(b). The write enable window defined by the WR_EN_AX signal in FIGURE 8(a) has been advanced with respect to that signal in FIGURE 5(a). As a result, the first half of each line of the auxiliary picture is written into FIFO 354, instead of the middle half. Similarly, the main video signal shown in FIGURE 9(b) is the same as the main video signal shown in FIGURE 6(b). The write enable window defined by the WR_EN_MN signal in FIGURE 8(a) has been delayed with respect to that signal in FIGURE 6(a). As a result, the second half of each line of the main picture is written into FIFO 356, instead of the middle half. The resulting multiplexed picture is shown in FIGURE 10(a). FIGURE 10(b) repeats the multiplexed picture from FIGURE 7(a), to facilitate a comparison of the effects of the independent horizontal panning.

Panning control means must therefore be responsible for the generation of the read and write enable signals for the main and auxiliary signal processing means, or paths, with the appropriate fixed and variable delays. In the presently preferred embodiment, such a panning control means may be thought of as comprising the WSP μP 340 and the clocks/sync circuit 320. The write and read enable signals are provided with the necessary delays under the control of the WSP μP 340. The WSP μP 340 receives user control information from the TV μP 216.

In operation, a main signal memory in the main signal processing path has write and read ports and is responsive to the panning control means. The main video signal is written into the main memory in accordance with a first variable panning delay from onset of each horizontal line period of the main video signal, and read from the main memory with a first fixed delay from the onset of each horizontal line period of the main video signal. The first fixed delay locates the main picture on a first lateral side of the side-by-side display, for example the left side, independently of the first variable panning delay.

An auxiliary signal memory in the auxiliary signal processing path has write and read ports and is also responsive to the panning control means. The auxiliary video signal is written into the auxiliary memory in accordance with a second variable panning delay from onset of each horizontal line period of the auxiliary video signal, independently of the first variable panning delay, and read from the auxiliary memory with a second fixed delay from the onset of each horizontal line period of the main video signal, different from the first fixed delay. The second fixed delay locates the auxiliary picture on a second side of the side-by-display, for example the right side, independently of the second variable panning delay. Picture position for both pictures is relative to the display means, which is generally synchronized with the main video signal.

The panning control means independently controls the main and auxiliary memory means. The panning control means can also be characterized by the generation of a first variable delay, a first fixed delay and a second fixed delay, all relative to horizontal synchronizing signals of said main video signal, and the generation of a second variable panning delay relative to horizontal synchronizing signals of the auxiliary video signal. It is also possible to establish the first and second fixed delays in hardware, if the positions of the main and auxiliary pictures never need to be changed or adjusted, and have the WSP μP 340 generate only the variable delays. The main and auxiliary pictures assume the side-by-side display format responsive to the first and second fixed delays and are independently pannable responsive to the first and second variable delays. More particularly, the main and auxiliary memory means are enabled for writing in accordance with the first and second variable panning delays respectively and are enabled for reading in accordance with the first and second fixed delays respectively.

The panning command signals may be initiated, for example, by activation of buttons on a remote control unit. Different sets of up/down or +/- pairs of buttons may be utilized for the left and right side pictures respectively. Up or + might generate a pan left signal, whereas down or - might generate a pan right signal. Alternatively, one pair of up/down or +/- buttons may be used in conjunction with either one of two other buttons, which select the left or right side picture. As a further alternative, a dedicated pair or pairs of left/right buttons might be utilized. Use of the buttons for controlling panning can be selected by a menu driven process. The user commands are received and interpreted by the TV μP 216, which transmits appropriate commands to the WSP μP 340 to implement the user commands.

## Claims

**1.** A video display system having:

- video display means (244); - first signal processing means (356) for cropping a first video signal (Y_MN) representative of a first picture;
- second signal processing means (354) for cropping a second video signal (YUV_AX) representative of a second picture;
- means (312) coupled to said first (356) and second (354) signal processing means for generating an adjacent display of respective uncropped portions of said first and second pictures on said video display means, said displayed respective portions being substantially comparable in size and shape,

  **characterized** by panning control means (340, 320), responsive to panning command signals, for independently controlling said first and second signal processing means to select which portions of said first and second pictures form said adjacent display.

**2.** System according to claim 1, wherein said panning control means (340, 320) generates a first variable delay, a first fixed delay and a second fixed delay, all relative to horizontal synchronizing signals of said first video signal (Y_MN), and generates a second variable delay relative to horizontal synchronizing signals of said second video signal (YUV_AX), said first and second pictures being positioned for said adjacent display format responsive to said first and second fixed delays and being independently pannable responsive to said first and second variable delays.

**3.** System according to 2, wherein each of said first (356) and second (354) signal processing means include a memory, said first and second variable delays being utilized for writing into said memories and said first and second fixed delays being used for reading from said memories.

**4.** System according to any of claims 1 to 3, wherein said video display means (244) has a wide format display ratio.

**5.** System according to any of claims 1 to 4, wherein said adjacent display is a side-by-side display.

**6.** System according to any of claims 1 to 5, wherein said first (356) and second (354) signal processing means include first and second asynchronous line memories, respectively, for cropping said first and second video signals, respectively.

**7.** System according to claim 6, wherein said line memories are first-in-first-out (FIFO) devices.

**8.** System according to any of claims 1 to 7, further including:

a first memory in said first signal processing means (356) having write and read ports (DATA_IN, DATA_OUT) and responsive to said panning control means (340, 320), said first video signal (Y_MN) being written into said first memory in accordance with a first variable panning delay from onset of each horizontal line period of said first video signal and being read from said first memory with a first fixed delay from said onset of each horizontal line period of said first video signal, which locates said first picture on a first lateral side of said side-by-side display independently of said first variable panning delay;

a second memory in said second signal processing means (354) having write and read ports (DATA_IN, DATA_OUT) and responsive to said panning control means (340, 320), said second video signal (YUV_AX) being written into said second memory in accordance with a second variable panning delay from onset of each horizontal line period of said second video signal, independently of said first variable panning delay, and being read from said second memory with a second fixed delay from said onset of each horizontal line period of said first video signal, different from said first fixed delay, which locates said second picture on a second side of said side-by-side display independently of said second variable panning delay.

**9.** System according to any of claims 1 to 8, further including means (216) for generating said panning command signals responsive to user input.

**Patentansprüche**

**1.** Video-Anzeigesystem mit:

- Video-Anzeigemitteln (244);
- ersten Signalverarbeitungsmitteln (356) zum Abschneiden eines ersten Videosignals (Y_MN), das repräsentativ für ein erstes Bild ist;
- zweiten Signalverarbeitungsmitteln (354) zum Abschneiden eines zweiten Videosignals (YUV_AX), das repräsentativ für ein zweites Bild ist;
- Mittel (312), die mit den ersten (356) und den zweiten (354) Signalverarbeitungsmitteln verbunden sind, um eine benachbarte Anzeige von entsprechenden nicht abgeschnittenen Teilen des ersten und zweiten Bildes auf den Video-Anzeigemitteln zu erzeugen, wobei die jeweils angezeigten Teile im wesentlichen vergleichbar in Große und Form sind,
gekennzeichnet durch Verschiebungs-Steuermittel (340, 320), die auf Verschiebungs-Befehlssignale ansprechen, um unabhängig die ersten und zweiten Signalverarbeitungsmittel so zu steuern, daß sie auswählen, welche Teile des ersten und zweiten Bildes die benachbarte Anzeige bilden.

2. System nach Anspruch 1, bei dem die Verschiebungs-Steuermittel (340, 320) eine erste veränderbare Verzögerung, eine erste feste Verzögerung, eine zweite feste Verzögerung, alle Verzögerungen relativ zu Horizontal-Synchronsignalen des ersten Videosignals (Y_MN), und eine zweite veränderbare Verzögerung relativ zu Horizontal-Synchronsignalen des zweiten Videosignals (YUV_AX) - erzeugen, wobei das erste und das zweite Bild für das benachbarte Anzeige-Format ansprechend auf die erste und zweite feste Verzögerung positioniert werden und ansprechend auf die erste und zweite Verzögerung unabhängig verschiebbar sind.

3. System nach Anspruch 2, bei dem die ersten (356) und zweiten (354) Signalverarbeitungsmittel jeweils einen Speicher enthalten, wobei die erste und die zweite veränderbare Verzögerung zum Einschreiben in die Speicher verwendet werden und die erste und zweite feste Verzögerung zum Lesen aus dem Speicher verwendet werden.

4. System nach einem der Ansprüche 1 bis 3, bei dem die Video-Anzeigemittel (244) ein Breitformat-Bildseitenverhältnis haben.

5. System nach einem der Ansprüche 1 bis 4, bei dem die benachbarte Anzeige eine Seite-an-Seite-Anzeige ist.

6. System nach einem der Ansprüche 1 bis 5, bei dem die ersten (356) und zweiten (354) Signalverarbeitungsmittel erste bzw. zweite asynchrone Zeilenspeicher enthalten, um das erste bzw. zweite Videosignal abzuschneiden.

7. System nach Anspruch 6, bei dem die Zeilenspeicher Erst-ein-erst-aus-(FIFO)-Vorrichtungen sind.

8. System nach einem der Ansprüche 1 bis 7, ferner enthaltend:

   einen ersten Speicher in den ersten Signalverarbeitungsmitteln (356) mit Schreib- und Leseanschlüssen (DTA_IN_DATA_PUT), die auf die Verschiebungs-Steuermittel (340, 320) ansprechen, wobei das erste Videosignal (Y_MN) in den ersten Speicher gemäß einer ersten veränderbaren Verschiebungs-Verzögerung vom Beginn jeder Horizontal-Zeilenperiode des ersten Videosignals eingeschrieben und aus dem ersten Speicher mit einer ersten festen Verzögerung vom Beginn jeder Horizontal-Zeilenperiode des ersten Videosignals ausgelesen wird, wodurch das erste Bild auf einer ersten Seite der Seite-an-Seite-Anzeige unabhängig von der ersten veränderbaren Verschiebungs-Verzögerung lokalisiert wird;

   einen zweiten Speicher in den zweiten Signalverarbeitungsmitteln (354) mit Schreib- und Leseanschlüssen (DATA_IN, DATA_OUT), die auf die Verschiebungs-Steuermittel (340, 320) ansprechen, wobei das zweite Videosignal (YUV_AX) in den zweiten Speicher gemäß einer zweiten veränderbaren Verschiebungs-Verzögerung vom Beginn jeder Horizontal-Zeilenperiode des zweiten Videosignals eingeschrieben und aus dem zweiten Speicher mit einer zweiten festen Verzögerung vom Beginn jeder Horizontal-Zeilenperiode des ersten Videosignals, die sich von der ersten festen Verzögerung unterscheidet, ausgelesen wird, wodurch das zweite Bild auf einer zweiten Seite der Seite-an-Seite-Anzeige unabhängig von der zweiten veränderbaren Verschiebungs-Verzögerung lokalisiert wird.

9. System nach einem der Ansprüche 1 bis 8, das ferner Mittel (216) enthält, um das Verschiebungs-Steuersignal in Abhängigkeit von der Eingabe eines Benutzers zu erzeugen.

**Revendications**

1. Système d'affichage vidéo comprenant:

   - un moyen d'affichage vidéo (244);
   - un premier moyen de traitement du signal (356) pour recadrer un premier signal vidéo (Y_MN) représentatif d'une première image;
   - un deuxième moyen de traitement du signal (354) pour recadrer un deuxième signal vidéo (YUV_AX) représentatif d'une deuxième image;
   - un moyen (312) couplé auxdits premier (356) et deuxième (354) moyens de traitement du signal pour générer un affichage adjacent de portions non recadrées respectives desdites première et deuxième images sur ledit moyen d'affichage vidéo, lesdites portions respectives affichées étant essentiellement de taille et de forme comparables,

   **caractérisé** par des moyens de commande de panoramique (340, 320) sensibles à des signaux de commande de panoramique, pour commander de manière indépendante lesdits premier et deuxième moyens de traitement du signal en vue de sélectionner quelles portions desdites première et deuxième images forment ledit affichage adjacent.

**2.** Système selon la revendication 1, dans lequel lesdits moyens de commande de panoramique (340, 320) génèrent un premier retard variable, un premier retard fixe et un deuxième retard fixe, tous relatifs à des signaux de synchronisation de ligne dudit premier signal vidéo (Y_MN), et génère un deuxième retard variable relatif à des signaux de synchronisation de ligne dudit deuxième signal vidéo (YUV_AX), lesdites première et deuxième images étant positionnées pour ledit format d'affichage adjacent en réponse auxdits premier et deuxième retards fixes et pouvant faire l'objet d'un panoramique indépendant en réponse auxdits premier et deuxième retards variables.

**3.** Système selon la revendication 2, dans lequel chacun desdits premier (356) et deuxième (354) moyens de traitement du signal comporte une mémoire, lesdits premier et deuxième retards variables étant utilisés pour écrire dans lesdites mémoires et lesdits premier et deuxième retards fixes étant utilisés pour lire dans lesdites mémoires.

**4.** Système selon l'une quelconque des revendications 1 à 3, dans lequel ledit moyen d'affichage vidéo (244) possède un grand rapport de format d'affichage.

**5.** Système selon l'une quelconque des revendications 1 à 4, dans lequel ledit affichage adjacent est un affichage côte à côte.

**6.** Système selon l'une quelconque des revendications 1 à 5, dans lequel lesdits premier (356) et deuxième (354) moyens de traitement du signal comportent des première et deuxième mémoires de lignes asynchrones, respectivement, pour recadrer lesdits premier et deuxième signaux vidéo, respectivement.

**7.** Système selon la revendication 6, dans lequel lesdites mémoires de lignes sont des composants du type premier entré premier sorti (FIFO).

**8.** Système selon l'une quelconque des revendications 1 à 7, comportant en outre:

une première mémoire dans ledit premier moyen de traitement du signal (356) présentant des ports d'écriture et de lecture (DATA_IN, DATA_OUT) et sensible auxdits moyens de commande de panoramique (340, 320), ledit premier signal vidéo (Y_MN) étant écrit dans ladite première mémoire conformément à un premier retard de panoramique variable par rapport au départ de chaque durée de ligne dudit premier signal vidéo et étant lu dans ladite première mémoire avec un premier retard fixe par rapport audit départ de chaque durée de ligne dudit premier signal vidéo, ce qui positionne ladite première image sur un premier côté latéral dudit affichage côte à côte, indépendamment dudit premier retard de panoramique variable;

une deuxième mémoire dans ledit deuxième moyen de traitement du signal (354) présentant des ports d'écriture et de lecture (DATA_IN, DATA_OUT) et sensible auxdits moyens de commande de panoramique (340, 320), ledit deuxième signal vidéo (YUV_AX) étant écrit dans ladite deuxième mémoire conformément à un deuxième retard de panoramique variable par rapport au départ de chaque durée de ligne dudit deuxième signal vidéo, indépendamment dudit premier retard de panoramique variable, et étant lu dans ladite deuxième mémoire avec un deuxième retard fixe par rapport audit départ de chaque durée de ligne dudit premier signal vidéo, différent dudit premier retard fixe, ce qui positionne ladite deuxième image sur un deuxième côté dudit affichage côte à côte, indépendamment dudit deuxième retard de panoramique variable.

**9.** Système selon l'une quelconque des revendications 1 à 8, comportant en outre un moyen (216) pour générer lesdits signaux de commande de panoramique en réponse à une entrée de l'utilisateur.

FIG. 2
356
FIFO
8
323
8
331
Y_MN
SWITCH
8
SWITCH
Y_MN
8
EXPANSION
COMPRESSION
8
8
INTERPOLATOR
8
337
ROUTE CONTROL
335
MAIN SIGNAL PATH
304
UV_MN
8
358
FIFO
8
UV_D
8
353
DEMUX SEL
U_D
8
V_D
8
READ/WRITE/CLOCK SIGNALS FOR FIFO'S, LINE DELAYS AND INTERPOLATION
TIMING SIGNALS
320
CLOCKS/ SYNC
357
RESOLUTION PROCESSING
VRAM_OUT
4
352
4-BIT TO 8-BIT
8
354
FIFO
8
355
SEL DEMUX
Y_PIP
U_PIP
V_PIP
6
8
6
6
INTERPOLATOR
359
367
LINE DELAY
Y_AUX
U_AUX
V_AUX
6
6
8
WSP μP DECODER
WSP DATA
310
TO OTHER SIGNAL PATHS
OUTPUT MUX CONTROL
321
OUTPUT SIGNAL PATH
312
0 1 MUX
8
Y_MX
315
317
0 1 MUX
8
U_MX
319
0 1 MUX
8
V_MX
AUXILIARY SIGNAL PATH
306

TO
INTERP. 337
FROM
INTERP. 337
323
356
Y_MN
SWITCH
WRITE
DATA_IN
WR_EN_MN
FIFO
910 X 8
READ
DATA_OUT
RD_EN_MN
SWITCH
TO
MUX 315
331
TO
DEMUX 353
WRITE
DATA_IN
WR_EN_UV
FIFO
910 X 8
READ
DATA_OUT
RD_EN_UV
UV_MN
320
358
WR_EN_MN
RD_EN_MN
WR_EN_UV
RD_EN_UV
RD_EN_AX
WR_EN_AX
PIP_CLK
FIG. 3
354
301
VRAM_OUT
4-BIT
TO
8-BIT
WR_EN_AX
DATA_IN
WRITE
FIFO
2048 X 8
RD_EN_AX
DATA_OUT
READ
TO
DEMUX 355
YUV_AX
PIP
VIDEO
RAM
350
352
DISPLAY_CLK
PIP_CLK

FIG. 4
4 X 3
CROPPED
AND/OR
SQUEEZED
4 X 3
CROPPED
AND/OR
SQUEEZED
245
(8:9)
246
(8:9)
244
(16:9)
67%
FIG. 5(a)
WR_EN_AX
FIG. 5(b)
AUX VIDEO
50%
FIG. 6(a)
WR_EN_MN
MAIN VIDEO
FIG. 6(b)
MAIN VIDEO
CROPPED
SEAM
AUX VIDEO
CROPPED
FIG. 7(a)
FIG. 7(b)
RD_EN_MN
FIG. 7(c)
RD_EN_AX

FIG. 8(a)
67%
WR_EN_AX
FIG. 8(b)
AUX VIDEO
FIG. 9(a)
50%
WR_EN_MN
FIG. 9(b)
MAIN VIDEO
FIG. 10(a)
SEAM
MAIN VIDEO CROPPED
AUX VIDEO CROPPED
FIG. 10(b)